# EUROPÄISCHE PATENTSCHRIFT

(11) **EP 1 929 619 B1**
(45) Veröffentlichungstag und Bekanntmachung des Hinweises auf die Patenterteilung: **29.06.2011**
(21) Anmeldenummer: 06793393.7
(22) Anmeldetag: 11.09.2006
(51) Int. Cl.: H02M 7/537

(54) **VERFAHREN ZUR ENERGIEZU- UND -ABFUHR ZU UND AUS EINER OHMSCHINDUKTIVEN LAST UND DABEI VERWENDETER GLEICHRICHTER**
METHOD FOR SUPPLYING AND DISCHARGING POWER TO AND FROM A RESISTIVE-INDUCTIVE LOAD, AND RECTIFIER USED THEREIN
PROCEDE D'ALIMENTATION EN ENERGIE ET DE DISSIPATION D'ENERGIE D'UNE CHARGE OHMIQUE INDUCTIVE ET REDRESSEUR UTILISE A CET EFFET

(30) Priorität: 30.09.2005 DE 102005047541
(43) Veröffentlichungstag der Anmeldung: 11.06.2008
(73) Patentinhaber: SIEMENS AKTIENGESELLSCHAFT, 80333 München (DE)
(72) Erfinder: CORDES, Ralf, 91058 Erlangen (DE); GRIEPENTROG, Gerd, 91468 Gutenstetten (DE); RUPP, Jürgen, 91056 Erlangen (DE)
(86) Internationale Anmeldenummer: PCT/EP2006/066211
(87) Internationale Veröffentlichungsnummer: WO 2007/039409

(56) Entgegenhaltungen:
- EP-A1- 0 154 779
- WO-A-03/047077
- WO-A2-01/58005
- DE-A1- 3 926 204
- DE-A1- 10 065 400

## Beschreibung

Die Erfindung bezieht sich auf ein Verfahren zur Energiezufuhr in und Energieabfuhr aus einer ohmsch-induktiven Last oder einer reinen Induktivität, die bspw. aus einem supraleitenden Leiter gebildet ist, und hierzu verwendete Stromrichterschaltungen. Ein solches Verfahren und die dazugehörige Vorrichtung sind in der DE10045400 beschrieben. Die Erfindung ist insbesondere zur Ansteuerung von Erregerwicklungen elektrischer Maschinen und Feldspulen geeignet. Daneben bezieht sich die Erfindung auch auf eine bei diesem Verfahren verwendete Schaltungsanordnung mit einem spezifischen Gleichrichter.

Anwendungen der Erregerwicklungen sind beispielsweise in medizinischen Geräten oder auch in Synchronmaschinen zu finden. Durch Energiezu- bzw. -abfuhr zu/von der Erregerwicklung wird der Erregerstrom auf- bzw. abgebaut und damit die Stärke des Magnetfeldes beeinflusst.

Oftmals sind solche Erregerwicklungen auch aus HTS-Materialien (HTS- = "High Temperature Superconductor", sog. Hochtemperatur-Supraleiter) aufgebaut, die zur Erhaltung der Supraleitung auf einer Temperatur von < 80 K gehalten werden müssen. Zur Aufrechterhaltung dieser geringen Temperatur sind eine Wärmezufuhr von außen sowie eine Wärmeerzeugung im gekühlten Gebiet weitgehend zu vermeiden.

Die zur Er- und Entregung benötigte elektrische Leistung ist oft sehr hoch, weil der Vorgang der Er- und Entregung sehr schnell stattfinden soll, um eine hohe Regelgüte zu erreichen. Zur Vermeidung großer Verluste bei der Zu- bzw. Abführung von elektrischer Leistung zur Veränderung des Stromes durch die induktive Last kann man vorteilhafterweise eine höhere Spannung verwenden und unmittelbar vor Speisung der induktiven Last eine Spannungstransformation vornehmen.

Für eine direkte Speisung der Erregerwicklung von außen müssten wegen der großen Stromstärken im Bereich von bis zu einigen 100 A Leitungen mit entsprechendem Querschnitt verwendet werden, die deswegen auch einen guten Wärmeleiter darstellen. Stattdessen ist es für die thermische Verlustleistungsbilanz günstiger, für die Energiezufuhr vom warmen in den kalten Bereich höhere Spannungen zu verwenden und damit den Leiterquerschnitt zu reduzieren. Die Spannung muss dann im kalten Bereich durch einen Übertrager ebenfalls transformiert sowie zur Speisung der Erregerwicklung gleichgerichtet werden.

Letzteres führt speziell bei Anwendungen für supraleitende Erregerwicklungen, bei der die Energie von der Umgebungstemperatur (sog. "warmer Bereich") bis zu einer Temperatur, die die Supraleitung erlaubt (sog. "kalter Bereich") zu reduzierten Verlusten in den Durchführungen vom warmen in den kalten Bereich.

Davon ausgehend ist es Aufgabe der Erfindung, ein Verfahren zur Energiezufuhr und Energieabfuhr zu einer Induktivität und insbesondere die zugehörigen technischen Mittel anzugeben. Derartige technische Mittel sind spezifisch ausgebildete Gleichrichter und Ansteuerverfahren der hierin enthaltenen Stromrichterventile.

Die Aufgabe ist durch ein Verfahren mit den Maßnahmen der Patentanspruches 1 gelöst. Eine Schaltungsanordnung mit einem spezifischen Gleichrichter als zur Durchführung des Verfahrens geeignetes technisches Mittel ist im Patentanspruch 7 angegeben. Weiterbildungen des Verfahrens und des zugehörigen Gleichrichters sind Gegenstand der abhängigen Ansprüche.

Gegenstand der Erfindung ist ein spezielles Ansteuerregime für eine spezifische Gleichrichterschaltung, mit dessen Hilfe ein besonders verlustarmer Betrieb des Gleichrichters bei der Speisung von ohmsch-induktiven Lasten erzielt werden kann, indem die Kommutierung des Stromes zwischen verschiedenen Gleichrichterzweigen verlustarm geschieht. Dies bezieht sich sowohl auf die Phase der Er- und Entregung der Induktivität, in der die in der Induktivität gespeicherte magnetische Energie auf- bzw. abgebaut wird, als auch die Phase gleichbleibenden Stromflusses durch die Induktivität.

Das Verfahren ist auf alle Gleichrichterschaltungen mit mehreren Gleichrichterzweigen, insbesondere Mehr-Vollbrücken Gleichrichterschaltung, anwendbar

Optional kann ein Freilaufzweig vorgesehen sein, der den Strom durch die Induktivität übernimmt, wenn dieser nicht verändert werden muss.

Die Erfindung ist insgesamt bei allen ohmsch-induktiven Lasten, Erregereinrichtungen für elektrische Maschinen und Feldspulen zur Erzeugung von Magnetfeldern anwendbar. Vorteilhaft ist dabei, dass das Verfahren zur besonders verlustarmen Wandlung auf der der Induktivität zugewandten Sekundärseite des Spannungswandlers, wobei der Spannungswandler aus einem primärseitigen Wechselrichter, einem Übertrager und einem sekundärseitigen Gleichrichter besteht. Der Spannungswandler kann in zwei Quadranten betrieben werden, um bei gleichbleibender sekundärseitiger Stromrichtung eine Ent- und Erregung der Induktivität zu erreichen.

Das erfindungsgemäße Verfahren ist besonders vorteilhaft bei der Speisung von HTS-Erregerwicklungen einsetzbar. Aber auch für andere Wicklungen von elektrischen Maschinen ist die Erfindung anwendbar.

Bei der erfindungsgemäßen Schaltungsanordnung mit spezifischem Gleichrichter bestehen die Stromrichterventile aus Leistungshalbleitern. Als Leistungshalbleiter werden vorteilhafterweise MOSFETs eingesetzt, weil diese keinen pn-Übergang mit der damit verbundenen Flussspannung U_{AK} und den hierdurch erzeugten Verlusten aufweisen. Vorzugsweise wird ein Stromrichterventil jeweils durch zwei antiseriell geschaltete MOSFETs gebildet, um eine Sperrspannung mit positiver und negativer Polarität aufbauen zu können, da ein einzelner MOSFET durch die intrinsisch enthaltene Diode keine Sperrwirkung in Rückwärtsrichtung aufweist.

Alternativ können als Leistungshalbleiter auch Thyristoren, IGBT's, GTO's oder IGCT's eingesetzt werden.

Bei der angegebenen Problemlösung kann neben dem Übertrager und dem Gleichrichter weiterhin optional ein Freilaufzweig parallel zur Erregerwicklung verwendet werden. Über diesen Freilaufzweig kann vorteilhafterweise der Strom geführt werden, wenn dessen Höhe nicht verändert werden muss. Der Strom kann also in diesem Fall auf kurzem Weg über ein niederohmiges Stromrichterventil geführt werden, ohne das der Strom über die Wicklungen des Übertragers fließen muss.

Weitere Einzelheiten und Vorteile der Erfindung ergeben sich aus der nachfolgenden Figurenbeschreibung eines Ausführungsbeispiels anhand der Zeichnung in Verbindung mit den weiteren Patentansprüchen. Es zeigen die
- Figur 1: einen Zweiweggleichrichter in Mittelpunktschaltung mit Freilaufzweig, wobei die einzelnen Schaltelemente durch MOSFETs gebildet sind, die von einem Mikropro- zessor angesteuert,werden.
- Figur 2: Verlauf der Signale in Bezug zur Primärspannung U_{P} bei Erregung der Induktivität nach dem Stand der Technik sowie zugehörige Ansteuerung der Stromrich- terventile.
- Figur 3: Verlauf der Signale in Bezug zur Primärspannung U_{P} bei Entregung der Induktivität nach dem Stand der Technik sowie zugehörige Ansteuerung der Stromrich- terventile.
- Figur 4: Verlauf der Signale in Bezug zur Primärspannung U_{P} bei Erregung der Induktivität bei verbesserter An- steuerung der Stromrichterventile.
- Figur 5: Verlauf der Signale in Bezug zur Primärspannung U_{P} bei Entregung der Induktivität bei verbesserter An- steuerung der Stromrichterventile.

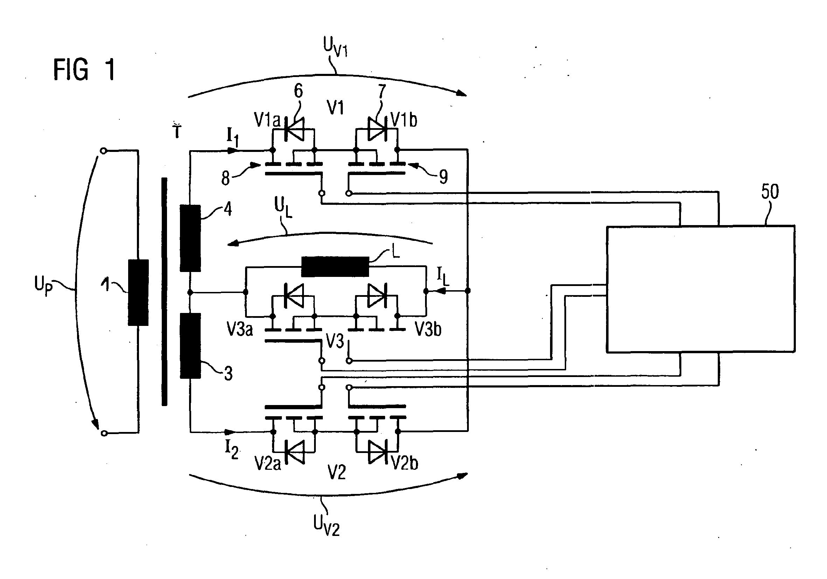

In Figur 1 ist ein Transformator T mit Primärseite 1 und Sekundärseite 3, 4 dargestellt. Der Transformator T wird primärseitig von einer Primärspannung Uₚ geeigneter Frequenz angesteuert, wobei Spannungsquelle und Wechselrichter nicht im Einzelnen dargestellt sind.

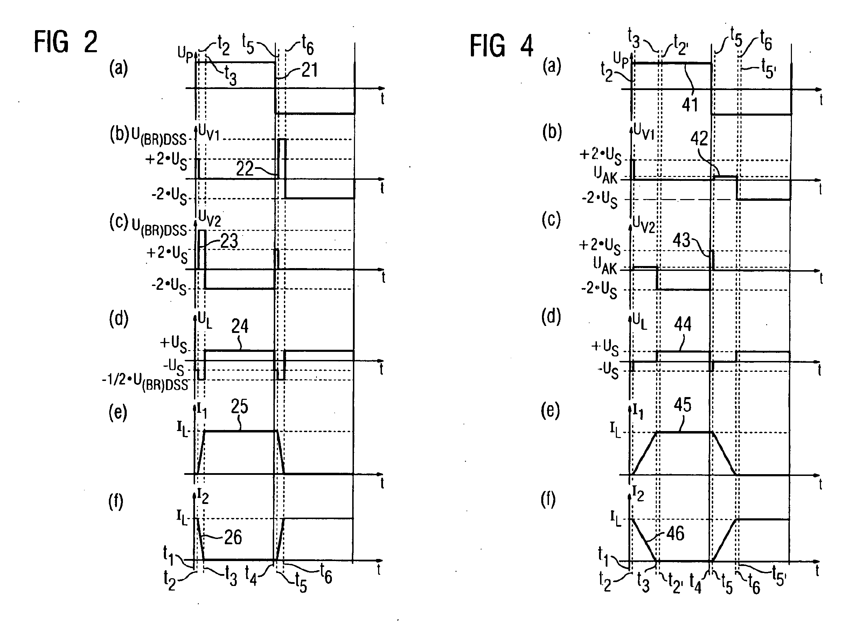

Die sekundärseitige Gleichrichteranordnung gemäß Figur 1 wird von einem Mikroprozessor 50 nach einem Ablaufprogramm gesteuert. Das Ablaufprogramm realisiert ein bestimmtes Ansteuerregime und wird anhand der Figuren 2 bis 5 weiter unten im Einzelnen beschrieben.

In der Figur 1 sind weiterhin die elektrotechnischen Symbole der einzelnen Elemente eingetragen. Dabei bedeuten:
- T:: Stromrichtertrafo mit sekundärseitiger Mittelanzap- fung
- L:: anzusteuernde ohmsch-induktive Last bzw. Induktivi- tät
- V1:: Stromrichterventil im oberen Zweig
- V2:: Stromrichterventil im unteren Zweig
- V3:: Stromrichterventil im Freilaufzweig
- V1a, V1b, V2a, V2b, V3a, V3b:: MOSFETs als Leistungshalbleiter einschließlich intrinsisch vorhandener Bodydiode
- I₁:: Strom im oberen Zweig
- I₂:: Strom im unteren Zweig
- I_{L}:: Strom durch die Induktivität
- U_{P}:: primärseitige Spannung am Stromrichtertrafo
- U_{S}:: sekundärseitige Spannung am Stromrichtertrafo je Wicklung - entspricht ü*Up
- U_{V1}:: die Spannung über dem oberen Stromrichterventil
- U_{V2}:: die Spannung über dem unteren Stromrichterventil
- U_{L}:: die Spannung über der Induktivität/dem Freilauf- kreis.

In Figur 1 bedeuten weiterhin 3 und 4 die Sekundärspulen des Stromrichtertrafos 5.

Dem Stromrichtertrafo 5 sind zwei Stromrichterventile V1 und V2, jeweils bestehend aus den antiseriell verschalteten MOSFETs V1a und V1b sowie V2a und V2b sekundärseitig zugeordnet. Weiterhin ist ein Stromrichterventil V3 bestehend aus den antiseriell verschalteten MOSFETs V3a und V3b für einen Freilaufzweig vorhanden.

Die einzelnen durch a und b unterschiedenen MOSFETs sind jeweils antiseriell gegeneinander geschaltet. Jeder MOSFET enthält prinzipbedingt eine intrinsische Bodydiode, die ebenfalls in Figur 1 dargestellt ist. Alternativ können extra Dioden außerhalb der MOSFETs vorgesehen sein, um die intrinsischen Bodydioden zu entlasten.

Statt der in Figur 1 gezeigten Zweipuls-Gleichrichterschaltung mit Mittelanzapfung kann jede andere Gleichrichterschaltung mit mehreren Gleichrichterzweigen, insbesondere Mehr-Vollbrücken Gleichrichterschaltungen, verwendet werden.

In den Figuren 2 bis 5 ist jeweils auf der Abszisse die Zeit und sind wechselweise auf der zugehörigen Ordinate die folgenden Größen aufgetragen:
- U_{P}:: primärseitige Spannung am Stromrichtertrafo
- U_{V1}:: Spannung über dem oberen Stromrichterventil
- U_{V2} :: Spannung über dem unteren Stromrichterventil
- U_{L}:: Spannung über der Induktivität L/dem Freilaufkreis
- I₁:: Strom im oberen Stromrichterventil
- I₂:: Strom im unteren Stromrichterventil

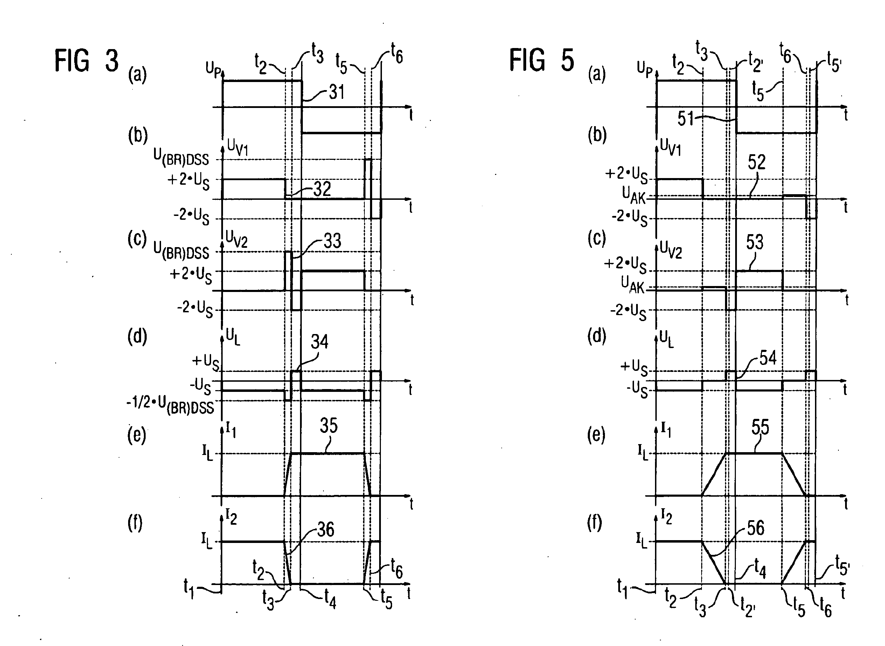

Es ergeben sich in Figur 2 die Graphen 21 bis 26, in Figur 3 die Graphen 31 bis 36, in Figur 4 die Graphen 41 bis 42 und in Figur 5 die Graphen 51 bis 55.

Hierbei zeigen die Figuren 2 und 3 zunächst den Betrieb des Zweipulsgleichrichters entsprechend dem Stand der Technik sowie die Figuren 4 und 5 den verbesserten Betrieb des Zweipulsgleichrichters mit reduzierter Verlustleistung infolge verbesserter Kommutierung des Stromes.

In den Figuren 2 und 3 sind signifikante Zeitpunkte tₓ bei der Kommutierung nach dem Stand der Technik wie folgt eingetragen:
- t1, t4:: Polaritätswechsel der primärseitigen Übertragerspan- nung
- t2:: Einschalten der Leistungshalbleiter V1a und V1b so- wie Ausschalten von V2a und V2b
- t3, t6:: Beendigung der Stromkommutierung
- t5:: Einschalten der Leistungshalbleiter V2a und V2b so- wie Ausschalten von V1a und V1b.

Bei dem beschriebenen Aufbau und der Ansteuerung des Gleichrichters gemäß Figur 1 ist wesentlich, dass die Energieverluste während der Kommutierung des Stromes zwischen den Stromrichterventilen reduziert werden.

Durch einen Freilaufzweig parallel zur Erregerwicklung kann der Strom geführt bzw. kurzgeschlossen werden, wenn dessen Höhe nicht verändert werden muss. Damit muss der Strom nicht über die zwangsläufig höheren ohmschen Wicklungswiderstände des Übertragers geführt werden sondern kann auf kurzem Weg über das niederohmige Stromrichterventil V3 geführt werden. Außerdem entfallen die Ummagnetisierungsverluste im Übertrager, da die Spannung während der Freilaufphase abgeschaltet werden kann.

Im stationären Zustand, bei dem weder Auf- noch Abbau des Erregerstromes erfolgt, muss die Erregereinrichtung bei Ansteuerung supraleitender Induktivitäten somit nur gelegentlich zum Ausgleich der Restverluste aktiviert werden, während der meisten Zeit ist der verlustarme Freilaufzweig aktiv.

Eine wesentliche Ursache für die Verluste beim Gleichrichter liegt im Kommutierungsvorgang von einem Stromrichterzweig bzw. Stromrichterventil auf den anderen Stromrichterzweig bzw. Stromrichterventil. Z. B. muss beim Gleichrichter nach Figur 1 der Strom vom Stromrichterventil V1 auf das Stromrichterventil V2 - und dementsprechend auch zurück - kommutiert werden.

Bei einer Ansteuerung der Ventile nach dem Stand der Technik werden hierzu die beiden MOSFETs V2a/V2b gemeinsam ein- und gleichzeitig oder unmittelbar darauf die beiden MOSFETs V1a/V1b gemeinsam ausgeschalten, Zeitpunkte t2 bzw. t5 in den Figuren 2 und 3. Der Strom, der durch die Erregerwicklung L weiter getrieben wird, kann jedoch nicht unendlich schnell von einem Stromrichterventil des Gleichrichters auf das andere kommutieren, weil die magnetische Energie in den Streuinduktivitäten der stromdurchflossenen Wicklungen des Übertragers erst ab- bzw. aufgebaut werden muss. Dies geschieht bei der genannten Art der Ventilsteuerung nach dem Stand der Technik dadurch, dass das Stromrichterventil des abzukommutierenden Zweiges (d.h. des Zweiges, der vom Strom verlassen wird) ab dem Zeitpunkt t2 bzw. t5 eine Sperrspannung aufbaut, die im wesentlichen der Drain-Source-Durchbruchspannung U_{(BR)DSS} des im Stromrichterventil eingesetzten MOSFETs V1a (V2a) entspricht. Diese Spannung ruft einen Abfall des Stroms im abzukommutierenden Zweig und einen Anstieg des Stroms im übernehmenden Zweig hervor, wobei die Summe beider Ströme immer dem Strom I_{L} durch die Induktivität L entspricht. Für die Zeit der Kommutierung bis zum Zeitpunkt t3 bzw. t6 ist dies mit hohen Verlusten im Stromrichterventil des abzukommutierenden Zweiges, insbesondere den MOSFETs V1a bzw. V2a, verbunden, wie aus der erhöhten Spannung über den Stromrichterventilen erkennbar ist.

Letzteres bedeutet, dass die in den Streuinduktivitäten gespeicherte Energie beim herkömmlichen Ansteuerverfahren bei jedem Kommutierungsvorgang in den Stromrichterventilen in Wärme umgesetzt wird. Neben der unerwünschten Wärmeeinbringung wird das Ventil damit in einem kritischen Betriebspunkt eingesetzt, was sich negativ auf die Zuverlässigkeit auswirkt.

Eine verbesserte Möglichkeit besteht darin, die beiden Stromrichterventile V1 und V2 für eine gewisse Zeit gemeinsam einzuschalten und damit einen Kurzschlussstromkreis aufzubauen. Wenn dies zu einem Zeitpunkt geschicht, wenn die primärseitige und damit sekundärseitige Spannung des Stromrichtertrafos so gerichtet ist, dass der Strom I₁ ab- und der Strom I₂ aufgebaut wird, dann wird sich der Strom I₁ reduzieren und der Strom I₂ erhöhen, wobei dies allein durch die sekundärseitige Spannung bewirkt wird. Das Ventil V1 muss nun exakt im Stromnulldurchgang von I₁ abgeschaltet werden.

Geschieht die Abschaltung zu früh, dann bleibt in den unvermeidbaren Streuinduktivitäten des Übertragers eine magnetische Restenergie gespeichert, die wiederum über die Drain-Source-Durchbruchspannung U_{(BR) DSS} abgebaut werden muss → siehe oben.

Geschieht die Abschaltung zu spät, wird der Strom I₁ nach seinem Nulldurchgang negativ werden und der Strom I₂ über den Strom I_{L} hinaus ansteigen. Die Abschaltung des negativen I₂ geschieht wiederum über die Source-Durchbruchspannung U_{(BR) DSS}.

In beiden Fällen führt das plötzliche Abschalten zu hohen Spannungsspitzen und damit verbunden zu hohen Verlustleistungen.

Da die Kommutierungszeit von der Höhe des zu kommutierenden Stromes durch die Induktivität abhängig ist, kann die Zeitdifferenz zwischen Einschalten von V2 und Abschalten von V1 nicht konstant gehalten werden, so dass eine reine Zeitsteuerung ausscheidet. Eine Detektion des Strom-Nulldurchgangs ist demgegenüber aufwändig und fehleranfällig.

Wesentlich ist nun, dass die beiden MOSFETs des Stromrichterventils nicht gemeinsam angesteuert werden, sondern getrennt derart, dass zunächst nur der MOSFET V1b abgeschaltet wird. Durch die intrinsische MOSFET-Diode oder auch eine zusätzlich vorgesehene, parallel geschaltete Diode wirkt damit das Stromrichterventil V1 als Freilaufventil über den noch eingeschalteten MOSFET V1a und die Diode von V1b Gleichzeitig werden die beiden MOSFETs V2a/V2b gemeinsam eingeschalten. Geschieht dies zu einem Zeitpunkt, zu den die Spannung an den Sekundärwicklungen des Übertragers so gerichtet ist, dass der Strom I₁ ab- und der Strom I₂ aufgebaut wird (siehe oben), so wird die Kommutierung durch die vom Übertrager zur Verfügung gestellte Spannung forciert.

Nach dem Abbau des Stromes I₁ in der Kommutierungsphase wird der Strom I₁ im Stromrichterventil V1 durch die Diode von V1b automatisch im Nulldurchgang unterbrochen, so dass durch die vom Übertrager gelieferte Spannung kein Rückstrom angetrieben werden kann. Verluste werden damit lediglich durch die Durchlassspannung U_{AK} der Diode verursacht. Nach Abklingen des Stromes I₁ auf Null wird auch der zweite Leistungshalbleiter V1a abgeschaltet. Dieses Abschalten von V1a ist nicht unmittelbar an den Nulldurchgang von I1 gekoppelt, sondern kann mit einem gewissen Abstand danach erfolgen. Dieser Abstand ist so bemessen, dass der maximale Erregerstrom kommutiert werden kann. Allerdings muss das Abschalten von V1a erfolgen bevor die Spannung an den Sekundärwicklungen des Übertragers ihre Polarität wechselt.

Die Signalverläufe des verbesserten Verfahrens sind in Figur 4 für die Erregung und in Figur 5 für die Entregung gezeigt. Hierin sind signifikante Zeitpunkte tₓ wie folgt eingetragen:
- t1, t4:: Polaritätswechsel der primärseitigen Übertragerspan- nung
- t2:: Einschalten der Leistungshalbleiter V1a und V1b so- wie Ausschalten von V2b
- t3, t6:: Beendigung der Stromkommutierung
- t2':: Ausschalten von V2a
- t5:: Einschalten der Leistungshalbleiter V2a und V2b so- wie Ausschalten von V1b
- t5':: Ausschalten von V1a

Ob ein Betrieb der Schaltung in Er- oder Entregung vorliegt, entscheidet sich durch die Lage der die Stromkommutierung kennzeichnenden Zeitpunkte t2, t2', t3, t5, t5' und t6 bezüglich der Zeitpunkte des Polaritätswechsel t1 bzw. t4 der primärseitigen Übertragerspannung.

Es wird deutlich, dass beim Kommutierungsvorgang durch exaktes Abschalten im Nulldurchgang der Diode des Ventils V1b ein Energieverlust vermieden wird.

Die diesbezügliche Stromkommutierung von einem der Stromrichterventile V1 oder V2 in den Freilaufzweig, verkörpert durch das Stromrichterventil V3, geschieht analog.

## Patentansprüche

1. Verfahren zur Energiezufuhr und Energieabfuhr von und zu ohmsch-induktiven Verbrauchern (L), insbesondere Induktivitäten, die der Erzeugung von Magnetfeldern dienen, wobei die zur Er- und Entregung notwendige elektrische Leistung zur Reduzierung von thermischen Verlusten mit höherer Spannung zugeführt wird, mit folgenden Maßnahmen:
- Es wird ein Spannungswandler, bestehend aus einem Übertrager (T) und einem Gleichrichter, verwendet,
- über den Gleichrichter mit niedriger Verlustleistung wird der ohmsch-induktive Verbraucher (L) gespeist, wobei zur Realisierung der Funktion des Gleichrichters Stromrichterventile (V₁,V₂) verwendet werden,
- die Ansteuerung der Stromrichterventile (V₁,V₂) erfolgt derart dass die Kommutierungsverluste auf der Sekundärseite des Übertragers (T) gering gehalten werden, wobei
- als Gleichrichter ein Mehrweggleichrichter mit mehreren Gleichrichterzweigen verwendet wird, zwischen denen der Strom kommutiert werden muss,
- in den Gleichrichterzweigen jeweils Stromrichterventile (V₁,V₂) eingesetzt werden, **dadurch gekennzeichnet, dass** die Stromrichterventile (V₁,V₂) aus zwei antiseriell geschalteten Leistungshalbleitern (V₁ₐ,V_{1b};V₂ₐ,V_{2b}) bestehen, wobei die Leistungshalbleiter (V₁ₐ,V_{1b};V₂ₐ,V_{2b}) keine Sperrwirkung in Rückwärtsrichtung aufweisen, wobei während der Kommutierung des Stromes von einem ersten, Stromrichterventil (V₁,V₂) zu einem zweiten Stromrichterventil (V₁,V₂) erst der erste Leistungshalbleiter (V₁ₐ,V₂ₐ) des ersten Stromrichterventils (V₁,V₂) abgeschaltet wird, während der zweite Leistungshalb leiter (V_{1b},V_{2b}) des Stromrichterventils gegenüber dem ersten (V₁ₐ,V_{2ab}) verzögert abgeschaltet wird.

2. verfahren nach Anspruch 1, **dadurch gekennzeichnet, dass** die Ansteuerung der Stromrichterventile (V₁,V₂) derart erfolgt, dass die Kommutierung des Stromes ausschließlich durch die sekundärseitige Spannung des Übertragers (T) bewirkt wird.

3. Verfahren nach Anspruch 1 oder 2, **dadurch gekennzeichnet, dass** die Stromrichterventile (V₁,V₂) in verschiedenen Gleichrichterzweigen in bestimmten Zeitabschnitten gleichzeitig eingeschaltet sind.

4. Verfahren nach einem der vorhergehenden Ansprüche, **dadurch gekennzeichnet, dass** ein Zweiweggleichrichter mit Mittelanzapfung mit zwei Stromrichterventilen (V₁,V₂) verwendet wird.

5. Verfahren nach einem der vorhergehenden Ansprüche, **dadurch gekennzeichnet, dass** zusätzlich zum Gleichrichter ein Freilaufkreis (V₃ₐ,V_{3b}) verwendet wird, der den Strom nach Abschaltung des Gleichrichters und des Übertragers (T) übernehmen kann, wobei die Kommutierung des Stromes in den Freilaufkreis (V₃ₐ,V_{3b}) entsprechend der Kommutierung zwischen verschiedenen Gleichrichterzweigen erfolgt.

6. Verfahren nach einem der vorhergehenden Ansprüche, **gekennzeichnet** in der Anwendung bei supraleitenden Spulen (L).

7. Schaltungsanordnung zur Durchführung des Verfahrens nach einem der Ansprüche 1 bis 6, **gekennzeichnet durch** einen Gleichrichter mit wenigstens zwei, antiseriell geschalteten Leistungshalbleitern (V₁ₐ,V_{1b};V₂ₐ,V_{2b}) mit fehlender Sperrwirkung in Rückwärtsrichtung je Gleichrichterzweig, wobei der Gleichrichter **durch**, eine zueinander verzögerte Abschaltung der Leistungshalbleiter (V₁ₐ,V_{1b};V₂ₐ,V_{2b}) eines Gleichrichterzweiges eine reduzierte Verlustleistung aufweist.

8. Anordnung nach Anspruch 7, **dadurch gekennzeichnet, dass** der Gleichrichter aus einer Zweipuls-Gleichrichterschaltung mit Mittelpunktanzapfung besteht.

9. Anordnung nach Anspruch 7, **dadurch gekennzeichnet, dass** der Gleichrichter aus einer Mehr-Vollbrücken Gleichrichterschaltung besteht.

10. Anordnung nach den Ansprüchen 7 bis 9, **dadurch gekennzeichnet, dass** die in jedem Stromrichterventil enthaltenen Leistungshalbleiter MOSFETs (V₁ₐ,V_{1b};V₂ₐ,V_{2b}) mit intrinsisch enthaltener oder zusätzlich parallel geschalteter Diode sind zum Ausschluss der Sperrwirkung in Rückwärtsrichtung.

11. Anordnung nach den Ansprüchen 7 bis 9, **dadurch gekennzeichnet, dass** die in jedem Stromrichterventil enthaltenen Leistungshalbleiter Thyristoren, IGBTs, GTOs oder IGCTs sind, wobei gegebenenfalls mit zusätzlich parallel geschalteten Dioden eine Sperrwirkung in Rückwärtsrichtung ausgeschlossen wird.

12. Anordnung nach einem der Ansprüche 8 bis 11, **dadurch gekennzeichnet, dass** neben den Gleichrichterzweigen ein Freilaufkreis (V₃ₐ,V_{3b}) vorhanden ist, der bei Abschaltung des Übertragers (T) und des Gleichrichters den Strom übernehmen kann.

13. Anordnung nach einem der Ansprüche 8 bis 12, **dadurch gekennzeichnet, dass** ein Mikroprozessor (50) zur Steuerung der Stromrichterventile nach vorgegebenem Programm vorhanden ist.

## Claims

1. Method for supplying energy to and discharging energy from resistive-inductive loads (L), particularly inductances, which are used to produce magnetic fields, the electrical power required for excitation and de-excitation being supplied at relatively high voltage in order to reduce thermal losses, having the following measures:
- a voltage transformer, comprising a transformer (T) and a rectifier, is used,
- the rectifier with low power loss is used to feed the resistive-inductive load (L), the function of the rectifier being implemented using converter valves (V₁, V₂),
- the converter valves (V₁, V₂) are actuated such that the commutation losses on the secondary side of the transformer (T) are kept low, wherein
- the rectifier used is a multipath rectifier having a plurality of rectifier paths between which the current needs to be commutated,
- the rectifier paths have respective converter valves (V₁, V₂) used in them, **characterized in that** the converter valves (V₁, V₂) comprise two reverse-connected series power semiconductors (V₁ₐ, V_{1b}; V₂ₐ, V_{2b}), the power semiconductors (V₁ₐ, V_{1b}; V₂ₐ, V_{2b}) having no inhibiting action in the reverse direction,
wherein during the commutation of the current from a first converter valve (V₁, V₂) to a second converter valve (V₁, V₂) the first power semiconductor (V₁ₐ; V₂ₐ) of the first converter valve (V₁, V₂) is switched off first, while the second power semiconductor (V_{1b}; V_{2b}) of the converter valve is switched off after a delay compared to the first (V₁ₐ, V₂ₐ) ·

2. Method according to Claim 1, **characterized in that** the converter valves (V₁, V₂) are actuated such that the commutation of the current is brought about exclusively by the secondary-side voltage of the transformer (T).

3. Method according to Claim 1 or 2, **characterized in that** the converter valves (V₁, V₂) in different rectifier paths are switched on simultaneously in particular time periods.

4. Method according to one of the preceding claims, **characterized in that** a two-path rectifier with a center tap with two converter valves (V₁, V₂) is used.

5. Method according to one of the preceding claims, **characterized in that** in addition to the rectifier a freewheeling circuit (V₃ₐ, V_{3b}) is used which can accept the current after the rectifier and the transformer (T) are switched off, the current being commutated into the freewheeling circuit (V₃ₐ, V_{3b}) in line with the commutation between different rectifier paths.

6. Method according to one of the preceding claims, **characterized in** application for superconductive coils (L).

7. Circuit arrangement for carrying out the method according to one of Claims 1 to 6, **characterized by** a rectifier having at least two reverse-connected series power semiconductors (V₁ₐ, V_{1b}; V₂ₐ, V_{2b}) with a lack of inhibiting action in the reverse direction per rectifier path, the rectifier having a reduced power loss as a result of the power semiconductors (V₁ₐ, V_{1b}; V₂ₐ, V_{2b}) in a rectifier path being switched off in a manner delayed with respect to one another.

8. Arrangement according to Claim 7, **characterized in that** the rectifier comprises a two-pulse rectifier circuit with a center tap.

9. Arrangement according to Claim 7, **characterized in that** the rectifier comprises a multiple full bridge rectifier circuit.

10. Arrangement according to Claims 7 to 9, **characterized in that** the power semiconductors which each converter valve contains are MOSFETs (V₁ₐ, V_{1b}; V₂ₐ, V_{2b}) with an intrinsically contained or additionally parallel connected diode for the purpose of eliminating the inhibiting action in the reverse direction.

11. Arrangement according to Claims 7 to 9, **characterized in that** the power semiconductors which each converter valve contains are thyristors, IGBTs, GTOs or IGCTs, with an inhibiting action in the reverse direction being eliminated possibly using additionally parallel connected diodes.

12. Arrangement according to one of Claims 8 to 11, **characterized in that** in addition to the rectifier paths there is a freewheeling circuit (V₃ₐ, V_{3b}) which can accept the current when the transformer (T) and the rectifier are switched off.

13. Arrangement according to one of Claims 8 to 12, **characterized in that** a microprocessor (50) for controlling the converter valves on the basis of a prescribed program is provided.

## Revendications

1. Procédé pour apporter de l'énergie à des utilisateurs ( L ) ohmiques inductifs, notamment à des inductances, et pour en évacuer de l'énergie, qui servent à la production de champs magnétiques, la puissance électrique nécessaire à l'excitation et à la désexcitation étant apportée avec une tension assez haute pour la réduction de pertes thermiques, comprenant les mesures suivantes :
- on utilise un convertisseur de tension constitué d'un transformateur ( T ) et d'un redresseur,
- on alimente l'utilisateur ( L ) ohmique inductif par le redresseur avec une petite perte de puissance, des soupapes ( V₁, V₂ ) de convertisseur de courant étant utilisées pour la réalisation de la fonction du redresseur,
- la commande des soupapes (V₁, V₂ ) de redresseur de courant s'effectue de manière à maintenir petites les pertes par commutation du côté secondaire du transformateur ( T ), dans lequel
- on utilise comme redresseur un redresseur à plusieurs voies ayant plusieurs branches de redresseur entre lesquelles le courant doit commuter,
- dans les branches du redresseur, on monte respectivement des soupapes ( V₁, V₂ ) de convertisseur de courant, **caractérisé en ce que** les soupapes ( V₁, V₂ ) de convertisseur de courant sont constituées de deux semiconducteurs ( V₁ₐ, V_{1b} ; V₂ₐ, V_{2b} ) de puissance montés en antisérie, les semiconducteurs ( V₁ₐ, V_{1b} ; V₂ₐ, V_{2b} ) de puissance n'ayant pas d'effet de blocage dans le sens inverse,
dans lequel pendant la commutation du courant d'une première soupape (V₁, V₂ ) de convertisseur de courant à une deuxième soupape (V₁, V₂ ) de convertisseur de courant, seulement le premier semiconducteur (V₁ₐ, V₂ₐ ) de puissance de la première soupape (V₁, V₂ ) de convertisseur de courant est bloqué, tandis que le deuxième semiconducteur ( V_{1b}, V_{2b} ) de puissance de la soupape de convertisseur de courant est bloqué, de manière retardée par rapport au premier (V₁ₐ, V₂ₐ ).

2. Procédé suivant la revendication 1, **caractérisé en ce que** la commande des soupapes ( V₁, V₂ ) de convertisseur de courant s'effectue de manière à ce que la commutation du courant soit provoquée exclusivement par la tension du côté secondaire du transformateur ( T ).

3. Procédé suivant la revendication 1 ou 2, **caractérisé en ce que** les soupapes (V₁, V₂) de convertisseur de courant sont passantes simultanément dans des créneaux temporels, déterminés dans diverses branches de redresseur de courant.

4. Procédé suivant l'une des revendications précédentes, **caractérisé en ce qu'**un redresseur à deux voies, ayant une prise médiane, est utilisé avec deux soupapes (V1, V2 ) de convertisseur de courant.

5. Procédé suivant l'une des revendications précédentes, **caractérisé en ce qu'**on utilise supplémentairement au redresseur, un circuit (V₃ₐ, V_{3b}) de roue libre, qui peut prendre en charge le courant après la mise hors circuit du redresseur et du transformateur (T), la commutation du courant dans le circuit ( V₃ₐ, V_{3b} ) de roue libre s'effectuant d'une manière qui correspond à la commutation entre diverses branches du redresseur.

6. Procédé suivant l'une des revendications précédentes, **caractérisé par** l'application dans des bobines ( L ) supraconductrices.

7. Montage pour la mise en oeuvre du procédé suivant l'une des revendications 1 à 6, **caractérisé par** un redresseur ayant au moins deux semiconducteurs (V₁ₐ, V_{1b} ;V₂ₐ, V_{2b} ) de puissance montés de manière antisérie et n'ayant pas d'effet de blocage dans le sens inverse pour chaque branche de redresseur, le redresseur ayant, par une mise hors circuit retardée les uns par rapport aux autres des semiconducteurs ( V₁ₐ, V_{1b} ;V₂ₐ, V_{2b} ) de puissance d'une branche de redresseur, une perte de puissance réduite.

8. Montage suivant la revendication 7, **caractérisé en ce que** le redresseur est constitué d'un circuit redresseur à deux impulsions ayant une prise médiane.

9. Montage suivant la revendication 7, **caractérisé en ce que** le redresseur est constitué d'un circuit redresseur à plusieurs ponts complets.

10. Montage suivant les revendications 7 à 9, **caractérisé en ce que** les semiconducteurs de puissance contenus dans chaque soupape de convertisseur de courant sont des MOSFET ( V₁ₐ, V_{1b} ; V₂ₐ, V_{2b}) ayant des diodes contenues intrinsèquement ou montées supplémentairement en parallèle pour exclure l'effet de blocage dans le sens inverse.

11. Montage suivant les revendications 7 à 9, **caractérisé en ce que** les semiconducteurs de puissance contenus dans chaque soupape de convertisseur de courant sont des thyristors, des IGBT, des GTO ou des IGCT, le cas échéant, un effet de blocage dans le sens inverse étant exclu par des diodes montées supplémentairement en parallèle.

12. Montage suivant l'une des revendications 8 à 11, **caractérisé en ce qu'**outre les branches de redresseur, il y a un circuit ( V3a, V3b ) de roue libre, qui prend en charge la mise hors circuit du transformateur ( T ) et du redresseur.

13. Montage suivant l'une des revendications 8 à 12, **caractérisé en ce qu'**il y a un microprocesseur (50 ) pour commander les soupapes de convertisseur de courant suivant un programme prescrit.
